(19) Europäisches Patentamt
European Patent Office
Office européen des brevets

(11) EP 1 048 350 B1

(12) EUROPEAN PATENT SPECIFICATION

(45) Date of publication and mention of the grant of the patent:
**02.06.2004 Bulletin 2004/23**

(51) Int Cl.7: **B01J 32/00**, C08G 61/08

(21) Application number: **00107818.7**

(22) Date of filing: **12.04.2000**

(54) **Polymeric homogeneous catalysts**

Homogene Polymerkatalysatoren

Catalyseurs polymères homogènes

(84) Designated Contracting States:
**AT BE CH CY DE DK ES FI FR GB GR IE IT LI LU MC NL PT SE**

(30) Priority: **21.04.1999 EP 99107886**

(43) Date of publication of application:
**02.11.2000 Bulletin 2000/44**

(73) Proprietor: **Degussa AG**
**40474 Düsseldorf (DE)**

(72) Inventors:
- **Bolm, Carsten Prof.**
  **52072 Aachen (DE)**
- **Brozio, Jörg**
  **52040 Aachen (DE)**
- **Dinter, Christian**
  **52062 Aachen (DE)**
- **Höcker, Hartwig Prof.**
  **52076 Aachen (DE)**
- **Seger, Andreas**
  **79539 Lörrach (DE)**

(56) References cited:
**EP-A- 0 901 997** **US-A- 4 883 851**

- **LU S -Y ET AL: "AQUEOUS RING-OPENING METATHESIS POLYMERISATION OF 7-OXANORBORNENE DERIVATIVES WITH OXYGEN-CONTAINING FUNCTIONALITIES" MACROMOLECULAR CHEMISTRY AND PHYSICS,DE,WILEY VCH, WEINHEIM, vol. 195, no. 4, 1 April 1994 (1994-04-01), pages 1273-1288, XP000439869 ISSN: 1022-1352**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 048 350 B1

## Description

The instant invention refers to polymeric homogeneous catalysts comprising an unsaturated polymer backbone. Especially, the polymeric backbone is derived by a so called ring opening metathesis polymerisation reaction (ROMP).

Polymeric catalysts are important goals for the production of chemical compounds on industrial scale due to their possible reuse, which often leads to a substantial saving of production costs.

In recent years the emphasis was put on the production of, especially, homogeneous forms of catalysts, because the omission of phase transitions during such catalysis leads to an increase in predictability of the reaction behaviour of catalysts in question.
One of the driving forces to evaluate more and more sophisticated catalysts lies in the availability of products in enhanced yields and shorter time periods, that is to say in an more economical way.

Beneath having a good catalytic system itself a special effort has to be put within the synthesis of the polymeric part of such catalysts. The DE 19910691.6 and DE 19647892.8 offer different solutions for this problem. Nevertheless, there is still a need for the production of new and different polymeric backbones for such compounds with superior properties.

Polymerically enlarged homogeneous catalysts disclosed in the art so far possess more or less randomly distributed catalytically active sides along their polymeric backbone and comprise an irregular polymer chain, which could alter the catalytic behaviour negatively.

It was, therefore, a task of this invention to disclose new polymerically enlarged homogeneous catalysts exhibiting more rigid polymeric backbones than known in the art, and which are, nevertheless, easy to synthesize.

This problem is solved by catalysts of claim one. Preferred embodiments of this invention are objects of claims 2 and 3. Claims 4 to 8 show an advantageous process for the production of catalysts of this invention. Claims 9 to 12 disclose preferred uses.

By reacting a compound of formula I

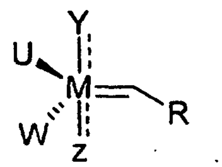

(I)

wherein

- U, W are Cl, Br, I, OR
- Y, Z are $PR'_3$, NR' or U
- R' is $(C_6\text{-}C_{18})$ -Aryl, $(C_3\text{-}C_{18})$ -Heteroaryl, $(C_3\text{-}C_8)$-Cycloalkyl, $(C_1\text{-}C_8)$ -Alkyl, $(C_6\text{-}C_{18})$-Aryl-$(C_1\text{-}C_8)$-Alkyl, $(C_3\text{-}C_{18})$-Heteroaryl-$(C_1\text{-}C_8)$-Alkyl, $(C_7\text{-}C_{19})$-Aralkyl, $(C_4\text{-}C_{19})$ -Heteroaralkyl,
- M is Ru, Mo
- R is $(C_6\text{-}C_{18})$-Aryl, $(C_3\text{-}C_{18})$-Heteroaryl, $(C_3\text{-}C_8)$-Cycloalkyl, $(C_3\text{-}C_8)$-Cycloalkenyl, H, $(C_1\text{-}C_8)$ -Alkyl, $(C_2\text{-}C_8)$ -Alkenyl,

in a non-reactive organic solvent or solvent mixture with a bicyclic olefin of formula II

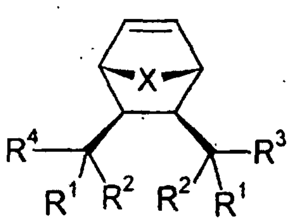

(II)

wherein
X is O, $NR^5$, $C(R^5)_2$, S, $POR^6$, $PR^6$,
$R^1$, $R^2$ are independently of each other H, $(C_1\text{-}C_8)$-Alkyl, $(C_2\text{-}C_8)$-Alkenyl, $(C_2\text{-}C_8)$ -Alkynyl, $(C_6\text{-}C_{18})$ -Aryl, $(C_7\text{-}C_{19})$-

Aralkyl, $(C_3\text{-}C_{18})$-Heteroaryl, $(C_4\text{-}C_{19})$ -Heteroaralkyl, $(C_3\text{-}C_8)$-Cycloalkyl, $(C_3\text{-}C_8)$-Cycloalkenyl, $(C_6\text{-}C_{18})$-Aryl-$(C_1\text{-}C_8)$ -Alkyl, $(C_3\text{-}C_{18})$-Heteroaryl-$(C_1\text{-}C_8)$-Alkyl, $(C_3\text{-}C_8)$-Cycloalkyl- $(C_1\text{-}C_8)$ -Alkyl, $(C_1\text{-}C_8)$ -Alkyl- $(C_3\text{-}C_8)$ -Cycloalkyl, or form together a =O-group,
$R^3$, $R^4$ are independently of each other $OR^1$, $SR^1$, $NR^5R^1$, $OR^7$, $SR^7$, $NR^5R^7$ provided that at least one residue $R^3$, $R^4$ bears a group $R^7$,
$R^5$ is $R^1$,
$R^6$ is $R^1$ provided that it can not be H and
$R^7$ is a catalytically active group, and optionally with a further olefinic compound III, preferably a cycloolefinic compound, polymerically enlarged homogeneous catalysts with a rigid unsaturated polymer backbone can be obtained advantageously in a highly modular way, and thus allow a flexible process optimisation by combining independently selected bicyclic framework and catalytically active subunits.

In formula I the dashed lines denote the possibility that groups Y, Z can be connected to the central atom via a double bond or normal bond. In case of NR' as ligand, for example, and Mo as central atom this appears to be the case. Nevertheless, in case of $PR_3$' as ligand and Ru as central atom a normal bond is build up in between.

Compounds of formula I and II can be mixed in any proportion. Compound III can optionally be added to this mixture, preferably in a range from 0-100 times by weight of the sum of I and II, most preferably between 0-10 times by weight.

Within the framework of this invention the catalytically active subunits embrace the subunit itself optionally-combined with a linker between active side and polymer backbone. Such linking molecules are known to the skilled man and could be introduced into the molecule in question by processes known in the art according to the demands of space and electronic behaviour of the considered reaction (Scheme 1).

Scheme 1:

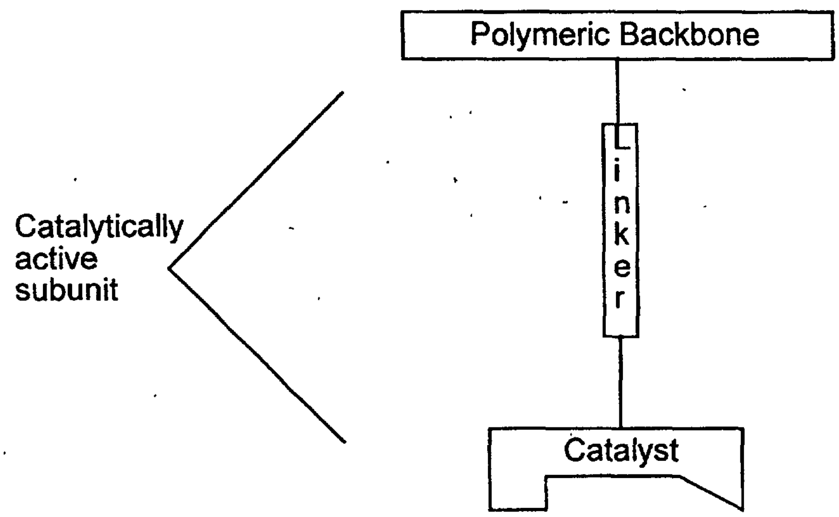


Linkers, which are feasible, are alkylenic, arylenic or silylenic linkers for example. In DE 19910691.6 further possible linkers are disclosed.

A further olefinic compound may be any organic molecule, which possess at least one double bond and which is known to the skilled worker to be suitable to react in ring opening metathesis reaction. This olefinic compound serves as a mean for copolymerization and dilutes the number of active sides per unit of length within the polymeric backbone. Therefore, this is another tool to adopt the catalysts of the invention to the most suitable demands of space necessary for the reaction in question..

Preferred compounds are ethylene, propene, butene, pentene, isobutene, isopropene and cyclic olefines like cyclopropene, cyclobutene, cyclopentene, cyclopentadiene, cyclohexene, cyclopheptene and the like. Even bicyclic olefinic compounds come into consideration, like norbornene, azulene, etc.

Preferred are catalysts characterised in that
R is Ph, X is O, $R^1$, $R^2$ form together a =O-group, $R^3$ is $R^4$, $O(C_1\text{-}C_8)$-Alkyl, $R^4$ is $OR^7$, $R^7$ is a catalytically active group of alcohols, amines, phospines or other, sulfur or phosphor containing groups.

More preferably the catalysts of the invention exhibit a residue $R^7$, which is a compound selected from the group of catalysts mentioned in DE 10003110 suitable for the considered families of chemical reactions.

Most preferred are catalysts selected from the group of Taddol-ligands (Seebach, Helv. Chim. Acta, 1996, 79, 1710f.), chiral salene-complexes (Salvadori, Tetrahedron Lett., 37, 1996, 3375f.), ligands for Sharpless-epoxidation like dihydrochinidines (Bolm, Angew. Chem., 1997, 773f.), 1,2-diaminoalcohols (Wandrey, Tetrahedron: Asymmetry, 1997, 8, 1529f.) or catalytic hydrogenation catalysts like 1,2-diphosphane-ligands, for example DIOP, DIPAMP; BPPFA, BPPM, CHIRAPHOS, PROPHOS, NORPHOS, BINAP, CYCPHOS, SKEWPHOS (BDPP), DEGPHOS, DuPHOS und PNNP.

Most preferred are catalysts mentioned in EP 305180.

As already mentioned the catalysts of the invention can be produced by technics known to the artisan with or without linkers between the active subunit and the backbone. Advantageously, a compound of formula I wherein

- U, W are Cl, Br, I, OR
- Y, Z are $PR'_3$, NR' or U
- R' is $(C_6\text{-}C_{18})$ -Aryl, $(C_3\text{-}C_{18})$ -Heteroaryl, $(C_3\text{-}C_8)$-Cycloalkyl, $(C_1\text{-}C_8)$ -Alkyl, $(C_6\text{-}C_{18})$ -Aryl- $(C_1\text{-}C_8)$ -Alkyl, $(C_3\text{-}C_{18})$-Heteroaryl-$(C_1\text{-}C_8)$-Alkyl, $(C_7\text{-}C_{19})$ -Aralkyl, $(C_4\text{-}C_{19})$ -Heteroaralkyl,
- M is Ru, Mo
- R is $(C_6\text{-}C_{18})$-Aryl, $(C_3\text{-}C_{18})$-Heteroaryl, $(C_3\text{-}C_8)$-Cycloalkyl, $(C_3\text{-}C_8)$ -Cycloalkenyl, H, $(C_1\text{-}C_8)$ -Alkyl, $(C_2\text{-}C_8)$ -Alkenyl,

is reacted in a non-reactive organic solvent or solvent mixture with a bicyclic olefin of formula II

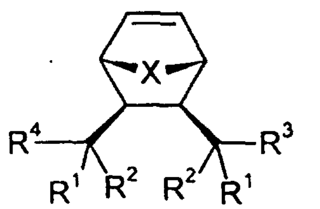

(II)

wherein

X is O, $NR^5$, $C(R^5)_2$, S, $POR^6$, $PR^6$,

$R^1$, $R^2$ are independently of each other H, $(C_1\text{-}C_8)$-Alkyl, $(C_2\text{-}C_8)$ -Alkenyl, $(C_2\text{-}C_8)$-Alkynyl, $(C_6\text{-}C_{18})$ -Aryl, $(C_7\text{-}C_{19})$ -Aralkyl, $(C_3\text{-}C_{18})$-Heteroaryl, $(C_4\text{-}C_{19})$-Heteroaralkyl, $(C_3\text{-}C_8)$-Cycloalkyl, $(C_3\text{-}C_8)$-Cycloalkenyl, $(C_6\text{-}C_{18})$ -Aryl-$(C_1\text{-}C_8)$ -Alkyl, $(C_3\text{-}C_{18})$-Heteroaryl-$(C_1\text{-}C_8)$-Alkyl, $(C_3\text{-}C_8)$ - Cycloalkyl-$(C_1\text{-}C_8)$-Alkyl, $(C_1\text{-}C_8)$-Alkyl-$(C_3\text{-}C_8)$-Cycloalkyl, or form together a =O-group,

$R^3$, $R^4$ are independently of each other $OR^1$, $SR^1$, $NR^5R^1$, $OR^7$, $SR^7$, $NR^5R^7$ provided that at least one residue $R^3$, $R^4$ bears a group $R^7$,

$R^5$ is $R^1$,

$R^6$ is $R^1$ provided that it can not be H and

$R^7$ is a catalytically active group, and optionally with a further olefinic compound III, preferably a cycloolefinic compound.

Preferably a process is chosen, in which I and II show R is Ph, X is O, $R^1$, $R^2$ form together a =O-group, $R^3$ is $R^4$, $O(C_1\text{-}C_8)$-Alkyl, $R^4$ is $OR^7$, $R^7$ is a catalytically active group.

Most preferred is a process, where $R^7$ is a compound selected from the groups presented above.

A feasible non-reactive organic solvent or part of the solvent mixture is a haloalkane, like for example dichloromethane and the like. The process is preferably conducted at temperatures between -20°C to 50°C, more preferably between -5°C and 30°C and most preferably between 5°C and 25°C.

The catalysts according to the invention can be used for organic synthesis purposes. Preferred is their use in a reactor, which is able to hold back the polymerically enlarged homogeneous catalysts, while permitting the starting material to be introduced in and the product to be released from the reactor. More preferably these catalysts are used in a membrane reactor. Such reactions and reaction conditions are specified in DE 19910691.6. In case of using optically enriched catalysts according to. the invention a use in a process for the production of optically active compounds is most preferred.

The following scheme discloses one possible way to synthesise catalysts of this invention.

Scheme 2:

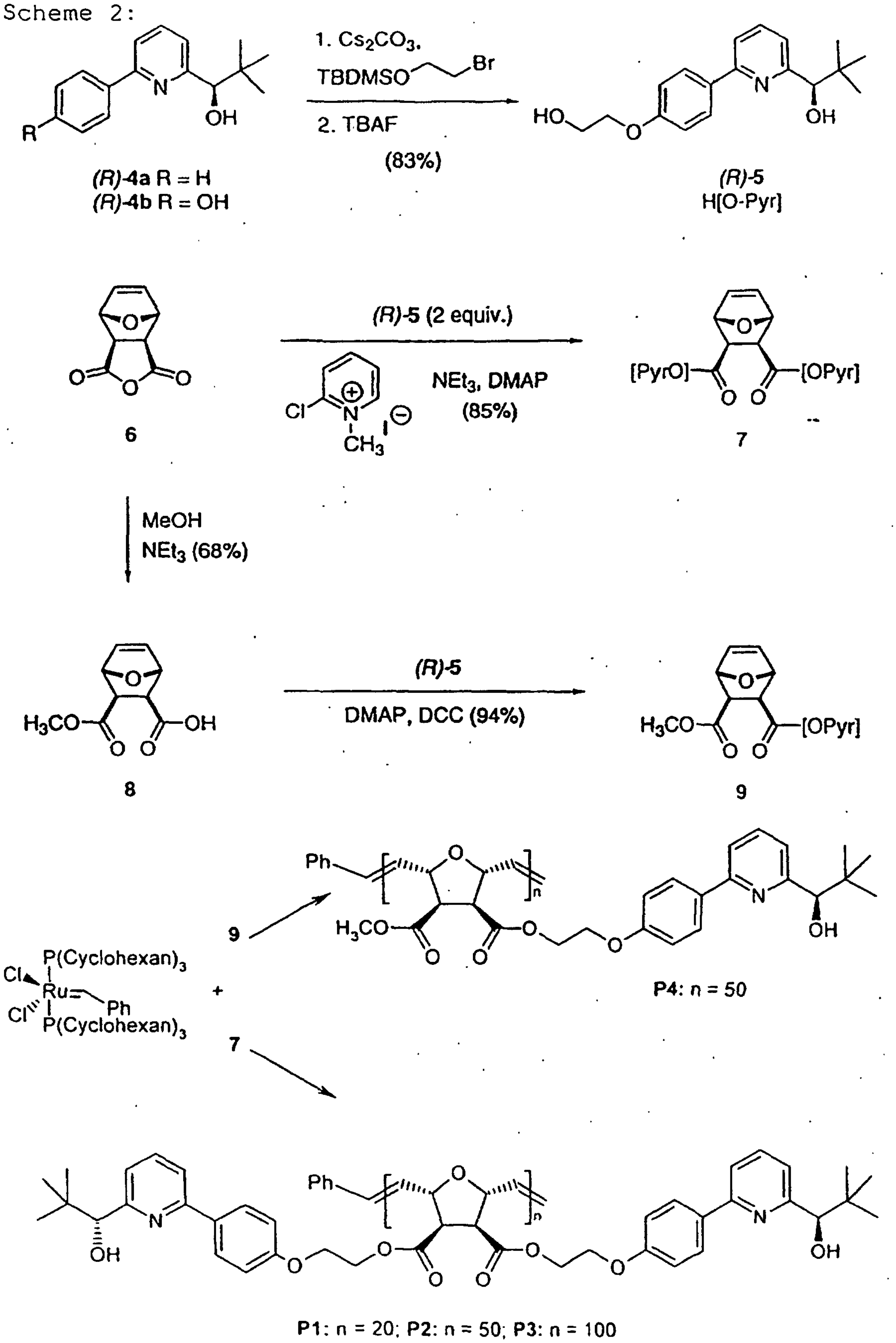
1. $Cs_2CO_3$,
TBDMSO Br
2. TBAF
(83%)
(R)-4a R = H
(R)-4b R = OH
(R)-5
H[O-Pyr]
(R)-5 (2 equiv.)
$NEt_3$, DMAP
(85%)
6
7
MeOH
$NEt_3$ (68%)
(R)-5
DMAP, DCC (94%)
8
9
9
+
7
P4: n = 50
P1: n = 20; P2: n = 50; P3: n = 100

The catalyst made are employed in a diethylzinc addition to benzaldehyde as a probe reaction. The results are shown down under in table 1.

**Table 1:** Reaction of benzaldehyde and diethylzinc catalyzed by various pyridinyl alcohols

$$\underset{\mathbf{10}}{PhCHO} + ZnEt_2 \xrightarrow[\text{2. work-up}]{\text{1. catalyst}} \underset{\mathbf{11}}{PhC^{*}H(OH)Et}$$

| Pyridinyl alcohol / polymer | $\overline{M}_w/\overline{M}_n$ | Time [h] | Yield of 11 [%] | *Ee* of 11[%][a] |
|---|---|---|---|---|
| 4a | -- | 4[b] | 91 | 87 |
| 5 | -- | 24[c] | 86 | 83 |
| 7 | -- | 24[b] | 72 | 79 |
| 9 | -- | 24[c] | 89 | 80 |
| P1 | 1.2 | 48[b] | 88 | 73 |
| P2 | 1.4 | 48[b] | 83 | 73 |
| P3 | 1.7 | 48[b] | 77 | 73 |
| P4 | 1.1 | 48[c] | 78 | 71 |

[a] Determined by HPLC using a chiral stationary phase. [b] Reaction was performed at 0 °C. [c] Reaction was performed at room temperature.

It can be deduced from these experiments that catalysts of the invention can serve as versatile tools in homogeneous catalytic organic reaction.

It is envisaged that each single structure of chiral catalysts of this invention denotes all and every possible diastereomers whether in their racemic form or optically enriched. Every of such diastereomers embraces and discloses the possible enantiomers, too.

There come into consideration as linear or branched ($C_1$-$C_8$)-alkyl radicals methyl, ethyl, n-propyl, isopropyl, n-butyl, isobutyl, sec-butyl, tert-butyl, pentyl, hexyl, heptyl or octyl, as well as all the isomers of constitution. The linear or branched ($C_2$-$C_8$) -alkenyl radical includes all substituents listed above in connection with the ($C_1$-$C_8$)-alkyl radical with the exception of the methyl radical, there being at least one double bond present in those radicals. The scope of ($C_2$-$C_8$)-alkynyl corresponds to that of ($C_2$-$C_8$)-alkenyl, but at least one triple bond must be present in that case. ($C_3$-$C_8$)-cycloalkyl is to be understood as being cyclopropyl, cyclobutyl, cyclopentyl, cyclohexyl or cycloheptyl radicals.
($C_3$-$C_8$)-cycloalkenyl denotes cycloalkylic radicals comprising one or more double bonds within the residue. ($C_6$-$C_{18}$)-aryl denotes arylic species with 6 to 18-C-atoms, like phenyl, naphthyl, phenanthryl.
($C_7$-$C_{19}$)-aralkyl are arylic radicals connected via a ($C_1$-$C_8$)-alkyl radikal with the molecule of respect, for example benzyl, 1-, 2-phenylethyl, naphthylmethyl.
($C_3$-$C_{18}$)-heteroaryl are arylic molecules in which at least one C-atom is substituted by a heteroatom like N, O, P, S. Molecules, which come into consideration, are pyrolyl, furyl, pyridyl, imidazolyl etc.
($C_4$-$C_{19}$)-heteroaralkyl are heteroarylic species bonded via a ($C_1$-$C_8$)-alkyl radical with the molecule of respect, like furfuryl, pyrolylmethyl, pyridylmethyl, furyl-1-, 2-ethyl, pyrolyl-1-, 2-ethyl.

Experimental Section:

General. *n*-Butyl lithium was purchased from Merck-Schuchardt as a 1.6 M solution in *n*-hexane, diethylzinc was provided as a generous gift from Witco. Bis(tricyclohexylphosphine)benzyliden-ruthenium(II) dichloride was purchased from Strem, (-)-*B*-chlorodiisopinocampheylborane 'DIP-Chloride™ from Aldrich. Tetrakis(triphenylphosphin) palladium(0) was a donation from Degussa. THF, diethylether, and toluene were distilled from sodium/benzophenone

ketyl radical under argon. Dichloromethane was distilled from $CaH_2$ under argon. All other solvents were reagent grade and used as received.

If not stated otherwise, the notion 'standard work-up' refers to quenching the reaction mixture with water, followed by extraction with an organic solvent. Washing of the organic layer subsequently with brine and water, drying of the combined organic phases with anhydrous $MgSO_4$ and evaporation of the solvent under reduced pressure afforded the crude product.

All syntheses of the monomeric and polymeric catalysts and all catalyses were repeated at least twice in order to ensure reproducibility. Given yields are average values. The enantiomeric excess of 1-phenylpropanol was determined by means of HPLC using a chiral column (Chiralcel OD).

## I. Syntheses of the monomeric precursors

***exo*-7-Oxabicyclo[2.2.1]hept-5-ene-2,3-dicarboxylic acid anhydride (6):** A dry Schlenk flask under argon was filled with maleic anhydride (9.81 g, 100 mmol) and 50 mL of toluene. The mixture was warmed to 80°C, and then furan (10.21 g, 150 mmol) was added. After stirring for 24 h at room temperature the mixture was cooled to 0°C, and the solid product was filtered off and washed with 30 mL methyl *tert*-butylether. Drying *in vacuo* furnished 11.78 g (71%) of **6** as a fine white powder. Mp: 116°C (decomposition). $^1H$ NMR (300 MHz, $CDCl_3$): δ 3.16 (s, 2H); 5.43 (s, 2H); 6.55 (s, 2H). $^{13}C$ NMR (75 MHz, $CDCl_3$): δ 48.7; 82.1; 136.9; 169.9. Reference: Furdik, M.; Drabek, J. *Tetrahedron* **1973,** *29*, 2445.

***rac*-7-Oxabicyclo[2.2.1]hept-5-ene-2,3-dicarboxylic acid monomethylester (8):** Triethylamine (0.51 g, 5 mmol) was added dropwise to a suspension of *exo*-7-oxabicyclo[2.2.1]hept-5-ene-2,3-dicarboxylic acid anhydride (6) (4.15 g, 25 mmol) in 25 mL of methanol and the mixture was stirred for 24 h at room temperature. After removal of methanol, the residue was dissolved in 25 mL of dichloromethane, and the resulting solution was washed subsequently with 7 mL of 1 M hydrochloric acid and 10 mL brine, followed by drying the organic phase with anhydrous $MgSO_4$. Evaporation of the solvent under reduced pressure yielded 3.37 g (68%) of **8** as a pale yellow solid. Mp: 110°C. $^1H$ NMR (300 MHz, $CDCl_3$): δ 2.86 (s, 2H); 3.71 (s, 3H); 5.27 (s, 1H); 5.31 (s, 1H); 6.48 (s, 2H); 10.20 (s, 1H). $^{13}C$ NMR (75 MHz, $CDCl_3$): δ 46.9; 47.2; 52.3; 80.4; 80.6; 136.4; 136.8; 171.8; 177.3.
Reference: Guanti, G.; Narisano, E.; Riva, R.; Thea, S. *Tetrahedron Lett*. **1986**, *38*, 4639.

### Synthesis of (*R*)-1-{6-[4-(2-hydroxyethoxy)phenyl]pyridin-2-yl}-2,2-dimethylpropanol (5):

**a) 4-(*tert*-Butyl dimethylsiloxy)phenylboronic acid:** Magnesium turnings (0.53 g, 22 mmol) and 20 mL of THF were placed into a two-necked flask. Next, *tert*-butyldimethylsilyloxyphenyl bromide(5.64 g, 19.6 mmol) was added and the mixture was heated under reflux for 2 h before it was cooled to room temperature. The brown mixture was added to a solution of trimethyl borate (2.43 g, 24 mmol) in 5 mL of THF through a dropping funnel at -78°C and allowed to warm to room temperature overnight. After hydrolysis with 90 mL of ca. 0.1 M hydrochloric acid followed by standard work-up with methyl *tert*-butyl ether, the brown residue was washed with 20 mL of cold hexane, and the resulting white product (3.86 g, 78%) was dried *in vacuo.* Mp: 175°C. $^1H$ NMR (300 MHz, $CDCl_3$): δ 0.25 (s, 6H); 1.01 (s, 9H); 6.95 (d, *J* = 8.5 Hz, 2H); 8.11 (d, *J* = 8.5 Hz, 2H). $^{13}C$ NMR (75 MHz, $CDCl_3$): δ -4.3; 18.1; 25.7; 119.8; 137.5; 159.8.
Reference: Bolm, C.; Derrien, N.; Seger, A. *Synlett* **1996**, 387.

**b) (R)-1-[6-(4-Hydroxyphenyl)-pyridin-2-yl]-2,2-dimethylpropanol (4b)**: Tetrakis-(triphenylphosphine)palladium(0) (1.16 g, 1 mmol) were dissolved in 50 mL of toluene in a two-necked flask under argon. Then, (*R*)-1-(6-bromopyridin-2-yl)-2,2-dimethylpropanol (4.88 g, 20 mmol) was added to the yellow suspension. Subsequently, solutions of sodium carbonate (4.24 g, 40 mmol) in 20 mL of distilled water and 4-(*tert*-butyldimethylsiloxy)phenylboronic acid in 25 mL of methanol were added and the mixture was heated under reflux for 6.5 h. After cooling to room temperature the reaction was quenched with 120 mL of saturated sodium carbonate solution and 20 mL of aqueous ammonia. The aqueous layer was extracted five times with dichloromethane, and the combined organic phases were washed with brine. Drying with anhydrous $MgSO_4$ and evaporation of the solvents under reduced pressure gave the crude product which was dissolved in 50 mL of THF. Next, 22 mL of TBAF (1 M in THF) were added' and the mixture was stirred for 5 h at room temperature. Standard work-up with dichloromethane gave crude 4b which was purified by column chromatography followed by recrystallization from toluene/hexane (2:1) to give 4.35 g (85%) of 4 b as white needles. The enantiomeric excess was determined by means of HPLC using a chiral column [Chiracel OD; eluent: *n*-heptane/*iso*-propanol = 85:15; flow: 1.0 mL/min; $t_R$ = 8.2 min (*R*); 10.3 min (*S*)] Mp: 130°C. $[\alpha]_D$ = -18.4 (c= 2.32, acetone). $^1H$ NMR (300 MHz, $CDCl_3$): δ 0.98 (s, 9H); 4.46 (s, 1H); 5.50 (s, 1H); 6.96 (d, *J* = 8.8 Hz, 2H); 7.06 (dd, *J* = 7.8 Hz, 0.8 Hz, 1H); 7.57 (dd, *J* = 8.0 Hz, 0.8 Hz, 1H); 7.67 (dd, *J* = 7.7 Hz, 1H); 7.89 (d, *J* = 8.8 Hz, 2H). $^{13}C$ NMR (75 MHz, $CDCl_3$): δ = 26.0; 36.3; 80.0; 115.8; 118.4; 120.5; 128.3; 130.9; 136.6; 155.1; 157.6; 158.4. MS (70 eV): m/z (%) 257 (M, 4), 200 (100). IR (KBr): 1613, 1571, 1519, 1455, 1282, 1173, 1052, 807 $cm^{-1}$. Anal. Calcd. for $C_{16}H_{19}NO_2$: C, 74.68; H, 7.44; N, 5.44. Found: C, 74.59; H, 7.37; N, 5.34.

**c) (*R*)-1-{6-[4-(2-Hydroxyethoxy)phenyl]pyridin-2-yl}-2,2-dimethylpropanol (5):** A dry 250 mL three-necked flask was charged with (*R*)-1-[6-(4-hydroxyphenyl)-pyridin-2-yl]-2,2-dimethylpropanol **(4b)** (2.54 g, 9.9 mmol), cesium carbonate (6.43 g, 19.8 mmol) and 100 mL of acetonitrile. Next, 2-bromoethyl-*tert*-butyldimethylsilyl ether was added through a dropping funnel. The mixture was heated under reflux for 2 h and stirred for additional 14 h at room temperature. After standard work-up with ethyl acetate the crude product was dissolved in 25 mL of THF and 11 mL of TBAF (1 M in THF) were added. After stirring for 1 h at room temperature, the solution was quenched with 50 mL of water and standard work-up with dichloromethane followed by column chromatography ($SiO_2$, eluent: ethyl acetate/hexanes =1:1) yielded 2.46 g (83%) of 5 as a white powder. Mp: 104°C. $[\alpha]_D$ = -14.4 (c = 2.28, acetone). $^1H$ NMR (300 MHz, $CDCl_3$): δ 0.96 (s, 9H); 2.36-2.40 (m, 1H); 3.95-4.01 (m, 2H); 4.11-4.15 (m, 2H); 4.39 (d, *J* = 7.4 Hz, 1H); 4.66 (d, *J* = 7.4 Hz, 1H); 7.01 (d, *J* = 8.8 Hz, 2H); 7.06 (dd, *J* = 7.97 Hz, 0.8 Hz, 1H); 7.57 (dd, *J* = 7.97 Hz, 0.8 Hz, 1H); 7.66 (m, 1H); 7.95 (d, *J* = 8.8 Hz, 2H). $^{13}C$ NMR (75 MHz, $CDCl_3$): δ 26.0; 36.3; 61.4; 69.4; 80.2; 114.7; 118.2; 120.7; 128.2; 131.9; 136.4; 155.0; 159.3; 159.7. MS (70 eV): m/z (%) 301 (M, 7), 244 (100). IR (KBr): 1608, 1576, 1516, 1453, 1255, 1174, 1046, 812 $cm^{-1}$. Anal. Calcd. for $C_{18}H_{23}NO_3$: C, 71.73; H, 7.69; N, 4.65. Found: C, 71.59; H, 7.68; N, 4.56.

**(*R,R*)-7-Oxabicyclo[2.2.1]hept-5-ene-(2-*exo*,3-*exo*)-dicarboxylic acid bis-(2-{4- [6-(1-hydroxy-2,2-dimethylpropyl)-pyridin-2-yl]phenoxy}ethyl)ester (7):** A dry 25 mL Schlenk flask was charged with *exo*-7-oxabicyclo[2.2.1]hept-5-ene-(2-*exo*,3-*exo*)-dicarboxylic acid anhydride **(6)** (415 mg, 2.5 mmol), (*R*)-1-{6-[4-(2-hydroxyethoxy)phenyl]pyridin-2-yl}-2,2-, dimethylpropanol (5) (1.50 g, 5 mmol) and 15 ml of dichloromethane. Next, triethylamine (759 mg, 7.5 mmol), 4-DMAP (122 mg, 1 mmol) and 2-chloro-1-methylpyridinium iodide (766 mg, 3 mmol) were added, and the resulting yellow mixture was stirred for 48 h at room temperature. Standard work-up with dichloromethane followed by column chromatography ($SiO_2$, eluent: methyl *tert*-butyl ether) of the crude product yielded 1.59 g (85%) of 7 as a white solid, which was stored at 0°C. Mp: 70-75°C. $[\alpha]_D$ = -12.3 (c = 2.10, toluene). $^1H$ NMR (300 MHz, $CDCl_3$): δ 0.95 (s, 18H); 2.89 (s, 2H); 4.15-4.22 (m, 4H); 4.36-4.40 (m, 2H); 4.44-4.48 (m, 4H); 4.59-4.65 (m, 2H); 5.28 (s, 2H); 6.45 (s, 2H); 6.95-7.00 (m, 4H); 7.04-7.08 (m, 2H); 7.52-7.56 (m, 2H); 7.61-7.67 (m, 2H); 7.90-7.97 (m, 4H). $^{13}C$ NMR (75 MHz, $CDCl_3$): δ 26.0; 36.3; 46.8; 63.5; 65.9; 80.1; 80.8; 114.8; 118.2; 120.7; 128.1; 132.0; 136.3; 136.7; 154.8; 159.3; 159.4; 171.4. MS (70 eV): m/z (%) 625 ($M-C_4H_4O-C_4H_9$, 18), 244 (100). IR (KBr): 1747, 1608, 1571, 1515, 1453, 1249, 1180, 1055, 813 $cm^{-1}$. Anal. Calcd. for $C_{44}H_{50}N_2O_9$: C, 70.38; H, 6.71; N, 3.73. Found: C; 70.10; H, 6.72; N, 3.51.

**7-Oxabicyclo[2.2.1]hept-5-ene-(2-*exo*,3-*exo*)-dicarboxylic acid methyl (*R*)-(2-{4-{6-(1-hydroxy-2,2-dimethyl-propyl)-pyridin-2-yl]phenoxy}ethyl)ester (9):** A dry 100 mL Schlenk flask was filled with 7-oxabicyclo [2.2.1]hept-5-ene-(2-*exo*,3-*exo*)-dicarboxylic acid monomethyl ester **(8)** (595 mg, 3 mmol), (*R*)-1-{6-[4-(2-hydroxyethoxy)phenyl]pyridin-2-yl}-2,2-dimethylpropanol (995 mg, 3.3 mmol) and 20 mL of dichloromethane. Next, 4-DMAP (55 mg, 0.45 mmol) and DCC (743 g, 3.6 mmol) were added and the mixture was stirred over a period of 24 h at room temperature. Standard work-up with dichloromethane followed by column chromatography ($SiO_2$, eluent: ethyl acetate/hexane = 2:1) afforded 9 as a white solid (1.35 g, 94%). Mp: 54-60°C. $[\alpha]_D$ = -7.2 (c =2.08, toluene). $^1H$ NMR (300 MHz, $CDCl_3$): δ 0.96 (s, 9H); 2.86 (s, 2H); 3.69 (s, 3H); 4.22-4.27 (m, 2H); 4.36-4.40 (m, 1H); 4.47-4.52 (m, 2H); 4.61-4.66 (m, 1H); 5.26-5.28 (m, 2H); 6.45 (s, 2H); 6.99-7.03 (m, 2H); 7.05-7.09 (m, 1H); 7.56-7.60 (m, 1H); 7.64-7.69 (m, 1H); 7.94-7.98 (m, 2H). $^{13}C$ NMR (75 MHz, $CDCl_3$): δ 26.0; 36.3; 46.7; 47.0; 52.3; 63.4; 65.9; 80.1; 80.5; 80.6; 114.8; 118.2; 120.7; 128.2; 132:0; 136.4; 136.6; 136.7; 154.8; 159.3; 159.4; 171.5; 171.9. MS (70 eV): m/z (%) 481 (M, 2), 356 (100). IR (KBr): 1747, 1609, 1571, 1516, 1435, 1248, 1180, 1054, 813 $cm^{-1}$. Anal. Calcd. for $C_{27}H_{31}NO_7$: C, 67.20; H, 6.49; N, 2.91. Found: C, 67.35; H, 6.82; N, 3.12.

**II. Polymerization of bicyclic olefins 7 and 9**

A dry Schlenk flask under argon was charged with $RuCl_2(CHC_6H_5)[P(C_6H_{11})_3]_2$ **(1)** which was dissolved in 3 mL of dichloromethane, and a solution of the bicyclic olefin (20, 50 or 100 equiv. of 7; 50 equiv. of 9) in 7 mL of dichloromethane was added. Stirring the mixture for 24 h at room temperature was followed by the addition of 0.3 mL of ethyl vinylether. After having it stirred for an additional hour, the solution was filtered (silica gel, dichloromethane) to remove the ruthenium catalyst and the solvent was evaporated. The grey/green solids were analyzed by $^1H$ NMR spectroscopy and subjected to GPC.

NMR-spectrospcopy: After the reaction no double bond signals for the bicyclic monomers (δ 6.45 ppm) can be detected anymore. Instead, broad signals at 5.5 and 5.8 ppm for the olefinic protons in the polymer were observed. For **P1**, **P2** and **P3**: $^1H$ NMR (300 MHz, $CDCl_3$): δ 0.90 (s); 2.98-3.20 (m); 4.05 (s); 4.36 (s); 4.50-4.72 (m); 5.17 (s); 5.52 (s); 5.84 (s); 6.80-7.04 (m); 7.38-7.62 (m); 7.76-7.92 (m); all signals are broad. For **P4**: $^1H$ NMR (300 MHz, $CDCl_3$): δ 0.93 (s); 3.10 (s); 3.59 (s); 4.15 (s); 4.32-4.50 (m); 4.55-4.78 (m); 5.10 (s); 5.58 (s); 5.90 (s); 6.88-7.10 (m); 7.44-7.70 (m); 7.86-800 (m); all signals are broad.

GPC analysis: Waters HPLC-pump type 510, flow: 1.0 mL/min, eluent: THF p.a., teflon-membrane filter 0.2 μm, 2 columns, each with a length of 500 mm and a diameter with Jordi DVB-gel of 1000Å and 100000 Å, respectively; Melz RI-detector LCD 201, calibration: PSS-Polystyrolstandards 500-750.000.

Table.

| Polymer yields and characterization | | | | | | | |
|---|---|---|---|---|---|---|---|
| Polymer | Monomer | Monomer equivalents | Amount of catalyst **1** (mg / µmol) | Polymer yield [%] | $\bar{M}_n$ | $\bar{M}_w$ | $\bar{M}_w/\bar{M}_n$ |
| **P1** | **7** | 20 | 24.8/30 | 49[a] | 15500 | 19100 | **1.2** |
| **P2** | **7** | 50 | 9.4/11.4 | 98 | 27700 | 38100 | **1.4** |
| **P3** | **7** | 100 | 5.0/6.0 | 35[a] | 32200 | 53100 | **1.7** |
| **P4** | **9** | 50 | 8.4 /10.2 | 99 | 29800 | 33300 | **1.1** |

[a] After additional chromatography through a sephadex column.

### III. Diethylzinc addition to benzaldehyde (10)

A dry Schlenk flask under argon was charged with 0.05 equiv. of the pyridinyl alcohol. The flask was evacuated twice and flushed with argon. Then, 5 mL of freshly distilled toluene were added followed by 1.5 equiv. of neat diethylzinc while stirred. After stirring for 20 min at room temperature, 1.0 equiv. of benzaldehyde **(10)** was added at the given temperature (see Table). The proceeding of the reaction was monitored by tlc. After full conversion of the aldehyde, the reaction was quenched by careful addition of 10 mL of 2 M HCl, and the resulting mixture was extracted three times with 25 mL of dichloromethane. The combined organic phases were washed with brine, dried over $MgSO_4$, and the solvent was removed under reduced pressure. The crude product was purified by column chromatography (silica gel, hexane/methyl *tert*-butylether = 10:1) followed by Kugelrohr distillation to give 1-phenylpropanol **(11)** as a colorless oil. The enantiomeric excess of **11** was determined by HPLC on a stationary phase [CHIRALCEL OD, *n*-heptane/*iso*-propanol = 98:2, 1.0 mL/min; $t_R$ = 17.2 min (*R*); 21.5 min (*S*)], and the absolute configuration was determined by correlation of the optical rotation with the values reported in the literature (Soai, K.; Ookawa, A.; Kaba, T.; Ogawa, K.; *J. Am. Chem. Soc.* **1987**, *109,* 7111).

Table.

| Reaction of benzaldehyde **(10)** and diethylzinc catalyzed by various pyridinyl alcohols | | | | |
|---|---|---|---|---|
| Pyridinyl alcohol /polymer | Amount of pyridinyl alcohol (mg/µmol[a]) | Time [h] | Yield of 11 [%] | *Ee* of 11[%] |
| **4a** | 15.0/62.1 | 4[b] | 91 | 87 |
| 5 | 15.0/49.8 | 24[c] | 86 | 83 |
| 7 | 16.8/44.6 | 24[b] | 72 | 79 |
| 9 | 38.1/79.1 | 24[c] | 89 | 80 |
| **P1** | 22.6/60.2 | 48[b] | 88 | 73 |
| **P2** | 23.1/61.5 | 48[b] | 83 | 73 |
| **P3** | 48.7/130.0 | 48[b] | 77 | 73 |
| **P4** | 35.3/73.0 | 48[c] | 78 | 71 |

[a]With respect to catalytically active subunits.
[b] Reaction was performed at 0 °C.
[c]Reaction was performed at room temperature.

## Claims

1. Homogeneous catalysts obtainable by reacting a compound of formula I

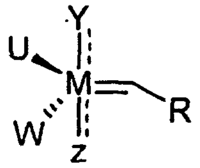

(I)

wherein

U, W are Cl, Br, I, OR
Y, Z are $PR'_3$, NR' or U
R' is $(C_6-C_{18})$ -Aryl, $(C_3-C_{18})$ -Heteroaryl, $(C_3-C_8)$-Cycloalkyl, $(C_1-C_8)$ -Alkyl, $(C_6-C_{18})$-Aryl-$(C_1-C_8)$-Alkyl, $(C_3-C_{18})$-Heteroaryl-$(C_1-C_8)$-Alkyl, $(C_7-C_{19})$-Aralkyl, $(C_4-C_{19})$ -Heteroaralkyl,
M is Ru, Mo
R is $(C_6-C_{18})$-Aryl, $(C_3-C_{18})$-Heteroaryl, $(C_3-C_8)$-Cycloalkyl, $(C_3-C_8)$-Cycloalkenyl, H, $(C_1-C_8)$-Alkyl, $(C_2-C_8)$ -Alkenyl,

in a non-reactive organic solvent or solvent mixture with a bicyclic olefin of formula II

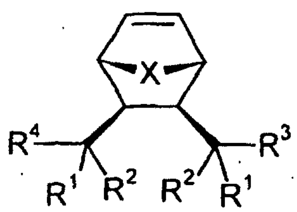

(II)

wherein
X is O, $NR^5$, $C(R^5)_2$, S, $POR^6$, $PR^6$,
$R^1$, $R^2$ are independently of each other H, $(C_1-C_8)$ -Alkyl, $C_2-C_8)$-Alkenyl, $(C_2-C_8)$-Alkynyl, $(C_6-C_{18})$-Aryl, $(C_7-C_{19})$ -Aralkyl, $(C_3-C_{18})$-Heteroaryl, $(C_4-C_{19})$-Heteroaralkyl, $(C_3-C_8)$-Cycloalkyl, $(C_3-C_8)$-Cycloalkenyl, $(C_6-C_{18})$-Aryl-$(C_1-C_8)$ -Alkyl, $(C_3-C_{18})$-Heteroaryl-$(C_1-C_8)$-Alkyl, $(C_3-C_8)$-Cycloalkyl- $(C_1-C_8)$ -Alkyl, $(C_1-C_8)$ -Alkyl- $(C_3-C_8)$-Cycloalkyl,
or form together a =O-group,
$R^3$, $R^4$ are independently of each other $OR^1$, $SR^1$, $NR^5R^1$, $OR^7$, $SR^7$, $NR^5R^7$ provided that at least one residue $R^3$, $R^4$ bears a group $R^7$,
$R^5$ is $R^1$,
$R^6$ is $R^1$ provided that it can not be H and
$R^7$ is a catalytically active group, and optionally with a further olefinic compound III, preferably a cycloolefinic compound.

**2.** Catalysts according to claim 1,
**characterised in that**,
R is Ph,
R' is Ph, $(C_1-C_8)$ -Alkyl,
X is O,
$R^1$, $R^2$ form together a =O-group,
$R^3$ is $R^4$, $O(C_1-C_8)$-Alkyl,
$R^4$ is $OR^7$,
$R^7$ is a catalytically active group of alcohols, amines, phospines or other, sulfur or phosphor containing groups.

**3.** Catalysts according to claim 1 and/or 2,
**characterised in that**,
$R^7$ is a compound selected from the group of Taddol-ligands, chiral salene-complexes, ligands for Sharpless-epoxidation like dihydrochinidines, 1,2-diaminoalcohols or catalytic hydrogenation catalysts like 1,2-diphosphane-ligands, for example DIOP, DIPAMP; BPPFA, BPPM, CHIRAPHOS, PROPHOS, NORPHOS, BINAP, CYCPHOS, SKEWPHOS (BDPP), DEGPHOS, DuPHOS und PNNP.

**4.** Process for the production of homogeneous catalysts according to claim 1,
**characterised in that**,
a compound of formula I

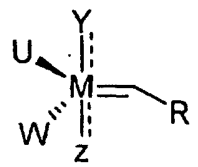

(I)

wherein

U, W are Cl, Br, I, OR

Y, Z are $PR'_3$, NR' or U

R' is ($C_6$-$C_{18}$)-Aryl, ($C_3$-$C_{18}$)-Heteroaryl, ($C_3$-$C_8$)-Cycloalkyl, ($C_1$-$C_8$) -Alkyl, ($C_6$-$C_{18}$)-Aryl-($C_1$-$C_8$)-Alkyl, ($C_3$-$C_{18}$)-Heteroaryl-($C_1$-$C_8$)-Alkyl, ($C_7$-$C_{19}$)-Aralkyl, ($C_4$-$C_{19}$) -Heteroaralkyl,

M is Ru, Mo

R is ($C_6$-$C_{18}$)-Aryl, ($C_3$-$C_{18}$)-Heteroaryl, ($C_3$-$C_8$)-Cycloalkyl, ($C_3$-$C_8$)-Cycloalkenyl, H, ($C_1$-$C_8$)-Alkyl, ($C_2$-$C_8$) -Alkenyl,

is reacted in a non-reactive organic solvent or solvent mixture with a bicyclic olefin of formula II

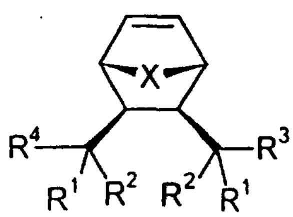

(II)

wherein
X is O, $NR^5$, $C(R^5)_2$, S, $POR^6$, $PR^6$,
$R^1$, $R^2$ are independently of each other H, ($C_1$-$C_8$)-Alkyl, ($C_2$-$C_8$)-Alkenyl, ($C_2$-$C_8$)-Alkynyl, ($C_6$-$C_{18}$)-Aryl, ($C_7$-$C_{19}$) - Aralkyl, ($C_3$-$C_{18}$)-Heteroaryl, ($C_4$-$C_{19}$)-Heteroaralkyl, ($C_3$-$C_8$)-Cycloalkyl, ($C_3$-$C_8$)-Cycloalkenyl, ($C_6$-$C_{18}$) -Aryl-($C_1$-$C_8$)-Alkyl, ($C_3$-$C_{18}$)-Heteroaryl-($C_1$-$C_8$)-Alkyl, ($C_3$-$C_8$)-Cycloalkyl- ($C_1$-$C_8$) -Alkyl, ($C_1$-$C_8$) -Alkyl- ($C_3$-$C_8$)-Cycloalkyl,
or form together a =O-group,
$R^3$, $R^4$ are independently of each other $OR^1$, $SR^1$, $NR^5R^1$, $OR^7$, $SR^7$, $NR^5R^7$ provided that at least one residue $R^3$, $R^4$ bears a group $R^7$,
$R^5$ is $R^1$,
$R^6$ is $R^1$ provided that it can not be H
and
$R^7$ is a catalytically active group, and optionally with a further olefinic compound III, preferably a cycloolefinic compound.

**5.** Process according to claim 4,
**characterised in that**,
R is Ph,
X is O,
$R^1$, $R^2$ form together a =O-group,
$R^3$ is $R^4$, O($C_1$-$C_8$)-Alkyl,
$R^4$ is $OR^7$,
$R^7$ is a catalytically active group of alcohols, amines, phospines or other, sulfur or phosphor containing groups.

**6.** Process according to claim 5 and/or 4,
**characterised in that**,
$R^7$ is a compound selected from the group presented by claim 3.

7. Process according to one or more of claims 4 to 6,
**characterised in that**,
the non reactive organic solvent or part of the solvent mixture is a haloalkane, like dichloromethane.

8. Process according to one or more of claims 4 to 7,
**characterised in that**,
the temperature during the process is from -20°C to 50°C, preferable between -5°C and 30°C.

9. Use of the catalysts according to claim 1 for organic synthesis purposes.

10. Use according to claim 9 in a reactor, which is able to hold back the polymeric catalysts, while permitting the starting material to be introduced in and the product to be released from the reactor.

11. Use according to claim 10, where the reactor is a membrane reactor.

12. Use according to one or more of claim 9 to 11, in a process for the production of optically active compounds provided that a optically active catalyst is used.

## Patentansprüche

1. Homogene Katalysatoren, herstellbar durch Reagieren einer Verbindung der Formel 1

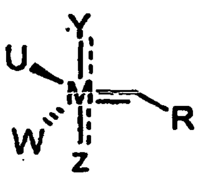

(I)

wobei Folgendes gilt:

U, W sind Cl, Br, I, oder
Y, Z sind $PR'_3$, NR' oder U,
R' ist ($C_6$-$C_{18}$)-Aryl, ($C_3$-$C_{18}$) -Heteroaryl, ($C_3$-$C_8$)-Cycloalkyl, ($C_1$-$C_8$)-Alkyl, ($C_6$-$C_{18}$)-Aryl-($C_1$-$C_8$)-Alkyl, ($C_3$-$C_{18}$)-Heteroaryl-($C_1$-$C_8$)-Alkyl, ($C_7$-$C_{19}$)-Aralkyl, ($C_4$-$C_{19}$) -Heteroaralkyl,
M ist Ru, Mo
R ist ($C_6$-$C_{18}$) -Aryl, ($C_3$-$C_{18}$) -Heteroaryl, ($C_3$-$C_8$)-Cycloalkyl, ($C_3$-$C_8$)-Cycloalkenyl, H, ($C_1$-$C_8$)-Al kyl , ($C_2$-$C_8$) -Alkenyl ,

n einem reaktionsunfähigen organischen Lösungsmittel oder Lösungsmittelgemisch mit einem bicyclischen Olefin der Formel II

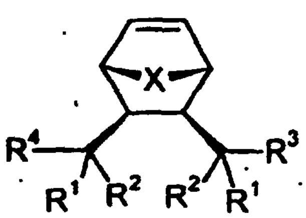

(II)

wobei Folgendes gilt:
X ist O, $NR^5$, $C(R^5)_2$, S, $POR^6$, $PR^6$,
$R^1$, $R^2$ sind unabhängig voneinander H, ($C_1$-$C_8$)-Alkyl, ($C_2$-$C_8$)-Alkenyl, ($C_2$-$C_8$)-Alkynyl, ($C_6$-$C_{18}$)-Aryl, ($C_7$-$C_{19}$) -Aralkyl, ($C_3$-$C_{18}$) -Heteroaryl, ($C_4$-$C_{19}$)-Heteroaralkyl, ($C_3$-$C_8$)-Cycloalkyl, ($C_3$-$C_8$)-Cycloalkenyl, ($C_6$-$C_{18}$) -Aryl-($C_1$-$C_8$)-Alkyl, ($C_3$-$C_{18}$)-Heteroaryl-($C_1$-$C_8$)-Alkyl, ($C_3$-$C_8$)-Cycloalkyl-($C_1$-$C_8$)-Alkyl, ($C_1$-$C_8$) Alkyl-($C_3$-$C_8$) -Cy-

cloalkyl, oder bilden gemeinsam eine =O-Gruppe,
$R^3$, $R^4$ sind unabhängig voneinander $OR^1$, $SR^1$, $NR^5R^1$, $OR^7$, $SR^7$, $NR^5R^7$, vorausgesetzt, dass wenigstens ein Rest $R^3$,
$R^4$ eine $R^7$-Gruppe trägt,
$R^5$ ist $R^1$,
$R^6$ ist $R^1$, vorausgesetzt, dass es nicht H sein kann, und
$R^7$ ist eine katalytisch aktive Gruppe, und optional mit einer weiteren Olefinverbindung III, vorzugsweise einer Cycloolefinverbindung.

2. Katalysatoren nach Anspruch 1, **dadurch gekennzeichnet, dass**
R Ph ist,
R' Ph, $(C_1-C_8)$ -Alkyl ist,
X O ist,
$R^1$, $R^2$ gemeinsam eine =O-Gruppe bilden,
$R^3$ $R^4$, $O(C_1-C_8)$-Alkyl ist,
$R^4$ $OR^7$ ist,
$R^7$ eine katalytisch aktive Gruppe von Alkoholen, Aminen, Phospinen oder anderen schwefel- oder phosphorhaltigen Gruppen ist.

3. Katalysatoren nach Anspruch 1 und/oder 2, **dadurch gekennzeichnet, dass** $R^7$ eine Verbindung ist, die ausgewählt wurde aus der Gruppe bestehend aus Taddol-Liganden, chiralen Salen-Komplexen, Liganden für Sharpless-Epoxidation wie Dihydrochinide, 1,2-Diaminoalkohole oder katalytische Hydrierkatalysatoren wie 1,2-Diphosphan-Liganden, zum Beispiel DIOP, DIPAMP; BPPFA, BPPM, CHIRAPHOS, PROPHOS, NORPHOS, BINAP, CYCPHOS, SKEWPHOS (BDPP), DEGPHOS, DuPHOS und PNNP.

4. Verfahren zur Herstellung von homogenen Katalysatoren nach Anspruch 1, **dadurch gekennzeichnet, dass** eine Verbindung der Formel 1

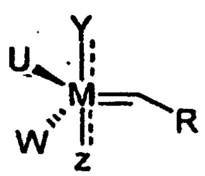

(I)

wobei Folgendes gilt:

| | |
|---|---|
| U, W | sind Cl, Br, I, oder |
| Y, Z | sind $PR'_3$, NR' oder U |
| R' | ist $(C_6-C_{18})$-Aryl, $(C_3-C_{18})$ -Heteroaryl, $(C_3-C_8)$-Cycloalkyl, $(C_1-C_8)$ -Alkyl, $(C_6-C_{18})$ -Aryl-$(C_1-C_8)$-Alkyl, $(C_3-C_{18})$ -Heteroaryl-$(C_1-C_8)$ -Alkyl, $(C_7-C_{19})$-Aralkyl, $(C_4-C_{19})$ -Heteroaralkyl, |
| M | ist Ru, Mo |
| R | ist $(C_6-C_{18})$ -Aryl, $(C_3-C_{18})$ -Heteroaryl, $(C_3-C_8)$-Cycloalkyl, $(C_3-C_8)$-Cycloalkenyl, H, $(C_1-C_8)$-Alkyl, $(C_2-C_8)$ -Alkenyl, |

in einem reaktionsunfähigen organischen Lösungsmittel oder Lösungsmittelgemisch mit einem bicyclischen Olefin der Formel II

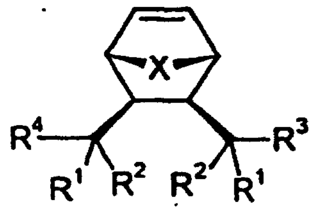

(II)

reagiert wird, wobei Folgendes gilt:
X ist O, $NR^5$, $C(R^5)_2$, S, $POR^6$, $PR^6$
$R^1$, $R^2$ sind unabhängig voneinander H, $(C_1-C_8)$-Alkyl, $(C_2-C_8)$-Alkenyl, $(C_2-C_8)$-Alkynyl, $(C_6-C_{18})$-Aryl, $(C_7-C_{19})$ -Aralkyl , $(C_3-C_{18})$ -Heteroaryl, $(C_4-C_{19})$-Heteroaralkyl, $(C_3-C_8)$-Cycloalkyl, $(C_3-C_8)$-Cycloalkenyl, $(C_6-C_{18})$ -Aryl-$(C_1-C_8)$-Alkyl, $(C_3-C_{18})$-Heteroaryl-$(C_1-C_8)$-Alkyl, $(C_3-C_8)$-Cycloalkyl-$(C_1-C_8)$-Alkyl, $(C_1-C_8)$ -Alkyl-$(C_3-C_8)$ -Cycloalkyl,
oder bilden zusammen eine =O-Gruppe,
$R^3$, $R^4$ sind unabhängig voneinander $OR^1$, $SR^1$, $NR^5R^1$, $OR^7$, $SR^7$, $NR^5R^7$, vorausgesetzt, dass wenigstens ein Rest $R^3$, $R^4$ eine $R^7$-Gruppe trägt,
$R^5$ ist $R^1$,
$R^6$ ist $R^1$, vorausgesetzt, dass es nicht H sein kann, und
$R^7$ ist eine katalytisch aktive Gruppe, und optional mit einer weiteren Olefinverbindung III, vorzugsweise einer Cycloolefinverbindung.

5. Verfahren nach Anspruch 4, **dadurch gekennzeichnet, dass**
R Ph ist,
X O ist,
$R^1$, $R^2$ gemeinsam eine =O-Gruppe bilden,
$R^3$ $R^4$, $O(C_1-C_8)$-Alkyl ist,
$R^4$ $OR^7$ ist,
$R^7$ eine katalytisch aktive Gruppe von Alkoholen, Aminen, Phospinen oder anderen schwefel- oder phosphorhaltigen Gruppen ist.

6. Verfahren nach Anspruch 5 und/oder 4, **dadurch gekennzeichnet, dass** $R^7$ eine Verbindung ist, die aus der durch Anspruch 3 repräsentierten Gruppe ausgewählt ist.

7. Verfahren nach einem oder mehreren der Ansprüche 4 bis 6, **dadurch gekennzeichnet, dass** das reaktionsunfähige organische Lösungsmittel oder Teil des Lösungsmittelgemischs ein Haloalkan wie Dichlormethan ist.

8. Verfahren nach einem oder mehreren der Ansprüche 4 bis 7, **dadurch gekennzeichnet, dass** die Temperatur während des Verfahrens zwischen -20°C und 50°C, vorzugsweise zwischen -5°C und 30°C liegt.

9. Verwendung der Katalysatoren nach Anspruch 1 für organische Synthesezwecke.

10. Verwendung nach Anspruch 9 in einem Reaktor, der die polymeren Katalysatoren zurückhalten kann und es gleichzeitig zulässt, dass das Ausgangsmaterial in den Reaktor eingeleitet und das Produkt aus dem Reaktor abgelassen wird.

11. Verwendung nach Anspruch 10, wobei der Reaktor ein Membranreaktor ist.

12. Verfahren nach einem oder mehreren der Ansprüche 9 bis 11 in einem Verfahren zur Herstellung von optisch aktiven Verbindungen, vorausgesetzt, dass ein optisch aktiver Katalysator verwendet wird.

## Revendications

1. Catalyseurs homogènes pouvant être obtenus en faisant réagir un composé de formule I

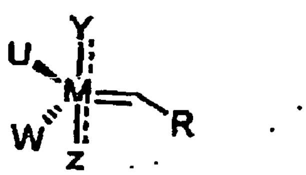

(I)

dans laquelle
U, W représentent Cl, Br, I, OR

Y, Z représentent $PR'_3$, NR' ou U
R' représente un groupe aryle en $C_6$-$C_{18}$, hétéroaryle en $C_3$-$C_{18}$, cycloalkyle en $C_3$-$C_8$, alkyle en $C_1$-$C_8$, aryle en $C_6$-$C_{18}$-alkyle en $C_1$-$C_8$, hétéroaryle en $C_3$-$C_{18}$-alkyle en $C_1$-$C_8$, aralkyle en $C_7$-$C_{19}$, hétéroaralkyle en $C_4$-$C_{19}$,
M représente Ru, Mo
R représente un groupe aryle en $C_6$-$C_{18}$, hétéroaryle en $C_3$-$C_{18}$, cycloalkyle en $C_3$-$C_8$, cycloalcényle en $C_3$-$C_8$, H, alkyle en $C_1$-$C_8$, alcényle en $C_2$-$C_8$,
dans un solvant organique non réactif ou un mélange de solvants avec une oléfine bicyclique de formule II

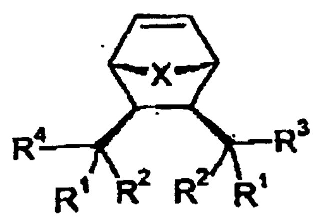

(II)

dans laquelle
X représente O, $NR^5$, $C(R^5)_2$, S, $POR^6$, $PR^6$,
$R^1$, $R^2$ représentent indépendamment l'un de l'autre un atome H, un groupe alkyle en $C_1$-$C_8$, alcényle en $C_2$-$C_8$, alcynyle en $C_2$-$C_8$, aryle en $C_6$-$C_{18}$, aralkyle en $C_7$-$C_{19}$, hétéroaryle en $C_3$-$C_{18}$, hétéroaralkyle en $C_4$-$C_{19}$, cycloalkyle en $C_3$-$C_8$, cycloalcényle en $C_3$-$C_8$, aryle en $C_6$-$C_{18}$-alkyle en $C_1$-$C_8$, hétéroaryle en $C_3$-$C_{18}$-alkyle en $C_1$-$C_8$, cycloalkyle en $C_3$-$C_8$-alkyle en $C_1$-$C_8$, alkyle en $C_1$-$C_8$-cycloalkyle en $C_3$-$C_8$, ou forment ensemble un groupe =O,
$R^3$, $R^4$ représentent indépendamment l'un de l'autre $OR^1$, $SR^1$, $NR^5R^1$, $OR^7$, $SR^7$, $NR^5R^7$ à condition qu'au moins un résidu $R^3$, $R^4$ porte un groupe $R^7$,
$R^5$ représente $R^1$,
$R^6$ représente $R^1$ à condition qu'il ne soit pas H, et
$R^7$ représente un groupe catalytiquement actif, et éventuellement avec un composé oléfinique III supplémentaire, de préférence un composé cyclooléfinique.

**2.** Catalyseurs selon la revendication 1,
**caractérisés en ce que**
R représente Ph,
R' représente Ph, un groupe alkyle en $C_1$-$C_8$,
X représente O,
$R^1$, $R^2$ forment ensemble un groupe =O,
$R^3$ représente $R^4$, un groupe alkyle-O en $C_1$-$C_8$,
$R^4$ représente $OR^7$,
$R^7$ représente un groupe catalytiquement actif d'alcools, d'amines, phosphines ou autres groupes contenant du soufre ou du phosphore.

**3.** Catalyseurs selon la revendication 1 et/ou 2,
**caractérisés en ce que**
$R^7$ représente un composé choisi dans le groupe des ligands Taddol, des complexes chiraux à base de salène, des ligands pour l'époxydation de Sharpless tels que les dihydrochinidines, 1,2-diaminoalcools ou les catalyseurs d'hydrogénation catalytique tels que les ligands 1,2-diphosphane, par exemple DIOP, DIPAMP ; BPPFA, BPPM, CHIRAPHOS, PROPHOS, NORPHOS, BINAP, CYCPHOS, SKEWPHOS (BDPP), DEGPHOS, DuPHOS et PNNP.

**4.** Procédé de production de catalyseurs homogènes selon la revendication 1,
**caractérisé en ce que**
un composé de formule I

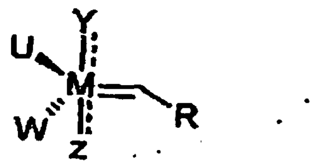

(I)

dans laquelle
U, W représentent Cl, Br, I, OR
Y, Z représentent $PR'_3$, NR' ou U
R' représente un groupe aryle en $C_6$-$C_{18}$, hétéroaryle en $C_3$-$C_{18}$, cycloalkyle en $C_3$-$C_8$, alkyle en $C_1$-$C_8$, aryle en $C_6$-$C_{18}$-alkyle en $C_1$-$C_8$, hétéroaryle en $C_3$-$C_{18}$-alkyle en $C_1$-$C_8$, aralkyle en $C_7$-$C_{19}$, hétéroaralkyle en $C_4$-$C_{19}$,
M représente Ru, Mo
R représente un groupe aryle en $C_6$-$C_{18}$, hétéroaryle en $C_3$-$C_{18}$, cycloalkyle en $C_3$-$C_8$, cycloalcényle en $C_3$-$C_8$, H, alkyle en $C_1$-$C_8$, alcényle en $C_2$-$C_8$,
est mis à réagir dans un solvant organique non réactif ou un mélange de solvants avec une oléfine bicyclique de formule II

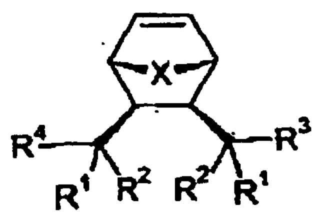

(II)

dans laquelle
X représente O, $NR^5$, $C(R^5)_2$, S, $POR^6$, $PR^6$,
$R^1$, $R^2$ représentent indépendamment l'un de l'autre un atome H, un groupe alkyle en $C_1$-$C_8$, alcényle en $C_2$-$C_8$, alcynyle en $C_2$-$C_8$, aryle en $C_6$-$C_{18}$, aralkyle en $C_7$-$C_{19}$, hétéroaryle en $C_3$-$C_{18}$, hétéroaralkyle en $C_4$-$C_{19}$, cycloalkyle en $C_3$-$C_8$, cycloalcényle en $C_3$-$C_8$, aryle en $C_6$-$C_{18}$-alkyle en $C_1$-$C_8$, hétéroaryle en $C_3$-$C_{18}$-alkyle en $C_1$-$C_8$, cycloalkyle en $C_3$-$C_8$-alkyle en $C_1$-$C_8$, alkyle en $C_1$-$C_8$-cycloalkyle en $C_3$-$C_8$, ou forment ensemble un groupe =O,
$R^3$, $R^4$ représentent indépendamment l'un de l'autre $OR^1$, $SR^1$, $NR^5R^1$, $OR^7$, $SR^7$, $NR^5R^7$ à condition qu'au moins un résidu $R^3$, $R^4$ porte un groupe $R^7$,
$R^5$ représente $R^1$,
$R^6$ représente $R^1$ à condition qu'il ne soit pas un atome H, et
$R^7$ représente un groupe catalytiquement actif, et éventuellement avec un composé oléfinique III supplémentaire, de préférence un composé cyclooléfinique.

**5.** Procédé selon la revendication 4,
**caractérisé en ce que**
R représente Ph,
X représente O,
$R^1$, $R^2$ forment ensemble un groupe =O,
$R^3$ représente $R^4$, un groupe alkyle-O en $C_1$-$C_8$,
$R^4$ représente $OR^7$,
$R^7$ représente un groupe catalytiquement actif d'alcools, d'amines, phosphines ou autres groupes contenant du soufre ou du phosphore.

**6.** Procédé selon la revendication 5 et/ou 4,
**caractérisé en ce que**
$R^7$ représente un composé choisi dans le groupe présenté par la revendication 3.

**7.** Procédé selon une ou plusieurs des revendications 4 à 6,
**caractérisé en ce que**

le solvant organique non-réactif ou une partie du mélange de solvants est un halogénoalcane tel que dichlorométhane.

**8.** Procédé selon une ou plusieurs des revendications 4 à 7,
**caractérisé en ce que**
la température pendant le procédé est comprise entre -20°C et 50°C, de préférence entre -5°C et 30°C.

**9.** Utilisation des catalyseurs selon la revendication 1 à des fins de synthèse organique.

**10.** Utilisation selon la revendication 9 dans un réacteur, qui est capable de retenir les catalyseurs polymères, tout en permettant d'introduire le matériau de départ et de libérer le produit du réacteur.

**11.** Utilisation selon la revendication 10, dans laquelle le réacteur est un réacteur à membrane.

**12.** Utilisation selon une ou plusieurs des revendications 9 à 11, dans un procédé de production de composés optiquement actifs à condition qu'un catalyseur optiquement actif soit utilisé.